(19) Europäisches Patentamt
European Patent Office
Office européen des brevets

(11) EP 2 009 613 A1

(12) EUROPEAN PATENT APPLICATION

(43) Date of publication:
31.12.2008 Bulletin 2009/01

(51) Int Cl.:
*G09B 23/28* (2006.01) *G09B 23/30* (2006.01)

(21) Application number: 07290826.2

(22) Date of filing: 29.06.2007

(84) Designated Contracting States:
AT BE BG CH CY CZ DE DK EE ES FI FR GB GR HU IE IS IT LI LT LU LV MC MT NL PL PT RO SE SI SK TR
Designated Extension States:
AL BA HR MK RS

(71) Applicant: Dies Srl
00187 Roma (IT)

(72) Inventor: Cusano, Corrado
00151 Roma (IT)

(74) Representative: Benech, Frédéric
146-150, Avenue des Champs-Elysées
75008 Paris (FR)

(54) **System for simultaing a manual interventional operation**

(57) The invention concerns a system and a method (1) for simulating a manual interventional operation by a user (2) on an object (3) with a surgical instrument.

The system comprises a tool (7) for simulating the surgical instrument, comprising a manual stick (8) supporting at least two spherical markers (9, 10) rigidly connected to each others, at least one of them (9) comprising a pattern (51, 55') on its surface, a box (6) with at least one aperture (4) comprising a working volume (24) reachable with the tool through said aperture, means (25) for capturing the position and axial orientation of said markers within said working volume and deducting from them the movements, the 3D position and the 3D orientation of the tool when operated by the user within said working volume, means (16-21) for visualizing a 3D model of the surgical instrument simulated by the tool in motion inside said working volume, means (19, 20) for simulating an image corresponding to said object, and means (16, 17, 19, 20) for simulating the action of said surgical instrument operated by the user on said object.

FIG.1

**Description**

The present invention concerns a system for simulating a manual interventional operation by a user on an object with one or a plurality of surgical instruments.

It also concerns a method for simulating such an operation.

It is more particularly, but not exclusively related to virtual surgery in ophthalmology applications such as cataract operations on the crystalline lens of the eyes.

But it can be adapted for the simulation of other kinds of surgery, the provided solution being applicable in all fields in which motion capture is required.

Systems for Computed Aided Surgery (CAS) are more and more used by surgeons all over the world.

They can be divided into three main families. The first family is consisting of assisted surgery systems comprising computer used to directly carry out cutting and other surgery operations.

The second family is constituted by navigation systems integrating multimodal images to assist the clinician during surgery by showing him, often with an emphasized reality, the anatomical tissue beneath the instruments.

The third family to which the present invention is related, concerns virtual surgery systems. ,

In many cases, proficiency can only be achieved after hundreds of surgeries.

In the past, surgeons could mainly train themselves using either dead bodies or mannequins, or when using living patients, with the assistance and supervision of a skilled physician.

As a consequence, training of a surgeon is a long, not very accurate and expensive procedure.

It is accordingly advantageous to develop expertise through virtual training in order to ensure successful operations without putting the patient health at risk.

To partially cure the deficiencies of such training in real operation, simulators have been developed.

However no simulations allowing direct training in condition as real as normal conditions, has been developed, due to the difficulties of obtaining a real time treatment of the manual movement of a surgeon in a sufficiently accurate way.

Many types of simulators are known in various domains.

One is known as the markers approach. This approach has been pioneered and largely exploited in the community of Human Motion Capture, where the markers are placed on the body joints. The motion of the Human skeleton can then be reconstructed from the markers motion.

Using this method it is known Commercial optoelectronic Motion Capture systems based on a video camera coupled with an illuminator using flat markers, covered with retro-reflecting material to produce a high-contrast image of the markers on the camera image plane.

As a result, all the pixels belonging to a marker appear as a blob on the image much brighter than the background.

The center of the markers image can then be computed as the baricenter of the cloud of pixels.

When the same marker is surveyed by a pair of cameras, its 3D position can be computed through triangulation.

One may think that this same approach can be introduced in virtual surgery. However the markers based approach to motion capture has its intrinsic inaccuracies. One of the main inaccuracies is related to the true position measured for a marker which renders a priori impossible to reach the great accuracy and reliability required in the augmented reality surgical systems to get reliable training.

Flat anisotropic, structured markers, like those used in close-range photogrammetry can guarantee high accuracy when surveyed frontally. However, their precise localization onto the image plane can be problematic if they are surveyed at an angle.

Similar problems arise when semi-spherical markers are adopted. Spherical markers were introduced to increase the accuracy with the rationale that their image onto the image plane is generally an ellipse, whose axes ratio depends on the angle of sight by the camera. When the angle of sight is small and / or the focal length is long, the ellipse tends to a circle.

In any case, the localization of the centre of a marker is inaccurate when the marker is partially occluded to the view of the camera, by other markers or other structures.

In this case, the marker projection onto the image plane assumes a characteristic "cheese-like" shape and the computation of the marker position can easily be biased. This is the reason why for reliablity reasons, partially occluded or overlapping markers are discarded in commercial systems.

This produces the unpleasant effect that the virtual instrument suddenly disappears from the scene or that it flickers.

For reliablity reasons, partially occluded or overlapping markers have therefore always been disregarded in commercial systems.

It is an object of the present invention to resolve these problems. A high accuracy in the computation of the markers position can then be achieved also in presence of partial occlusions and overlaps.

The second problem of the prior art, comes from the fact that in classical 3D motion capture it is required a structure to carry eccentric markers.

These are required to recover the axial rotation of body segments of surgical instruments.

At least three markers are then needed to compute the six degrees of freedom of any surgical instrument, viewed as a rigid body.

As the markers position has to be linearly independent, the markers have to be spread orthogonally to the instrument axis. As a consequence, the markers support may interfere with the surgeon movements and it does produce a capture volume larger than the volume occupied by the instruments motion.

With the present invention, it is possible to recover all the six degrees of freedom of a surgical instrument without such default. This allows reducing the Motion Capture dimension to a minimum, and a more comfortable setup could be provided to surgeons working with real time navigation or virtual surgical systems.

Accordingly it is an object of the present invention to allow enhanced training of medical procedures to surgeons by providing better accuracy and more realistic simulation in real time.

To this end, the present invention essentially provides a system for simulating a manual interventional operation by a user on an object with at least one surgical instrument, characterized in that said system comprises a tool for simulating said surgical instrument, comprising a manual stick supporting at least two aligned spherical markers rigidly connected to each others, at least one of them comprising a pattern on its surface, a box with at least one aperture comprising a working volume reachable with the tool through said aperture, means for capturing the position and axial orientation of said markers within said working volume and deducting from them the movements, the 3D position and the 3D orientation, including axial orientation, of the tool when operated by the user within said working volume, means for visualizing a 3D model of the surgical instrument simulated by the tool in motion inside said working volume, means for simulating an image corresponding to said object, and means for simulating the action of said surgical instrument operated by the user on said object.

The invention is based on a two-level architecture where the first level is devoted to capture the movement of the instruments operated by the surgeon through micro Motion Capture targeted to acquire the motion of the surgical instruments, and the second level visualizes a 3D virtual model of the instruments in motion inside the surgery volume.

The two levels are for instance arranged to communicate by fast Ethernet, but other communication modalities can be adopted.

With the invention it is possible to operate in very small volumes, for instance with a working volume of 20mm x 20mm x 20mm, and distance accuracy as low as 0.1mm as well as an orientation accuracy of 3 degrees can be obtained.

Also, one of the main advantages of the present invention is the ability to accurately detect the markers in presence of overlappings or partial occlusions, and, above all, on the ability to recover all the six degrees of freedom of an instrument using markers positioned only along the instrument axis, without resorting to eccentric markers as the traditional approach requires. This is obtained by using spherical markers with a pattern painted on at least one of them.

This solution, combined with the other features, allows reducing the Motion Capture sub-system dimension to a minimum and makes the surgeon's work more comfortable.

In advantageous embodiments, recourse is further had to one and/or other of the following arrangements:

- the means for capturing the movements and axial orientation of the markers comprise a set of at least two cameras having co-axial flashes (i.e. flashes orientated with axis parallel to the axis of the camera), said cameras being externally synchronized, connected to processing means, placed inside the box containing said working volume and oriented such as all the points inside the working volume result in focus;
- the means for capturing the movement of the instrument comprise four cameras;
- the means comprise more than four cameras, i.e. five, six or eight cameras;
- the processing means comprise means to extract the pixels belonging to each markers by a threshold technique, for obtaining a binary image, grouping the over-threshold pixels into blobs and computing the centre of each blob for deducting the position and the axial orientation of the marker;
- the tool comprises at least three spherical markers disposed along the stick at predetermined distances between each others;
- at least two markers respectively comprise a pattern on their surface;
- the means for visualizing a 3D model of the instrument and the means for simulating an image of the object and for simulating the action of said instrument on said object comprise a display screen and controlling means of the operation by the user actionable by foot;
- the pattern or one of the patterns is a stripe segment;
- the pattern or one of the patterns has a crux form.

The invention also proposes a method for implementing the system as above described.

It also proposes a method for simulating a manual interventional operation by a user on an object with a surgical instrument, characterized in that it comprises the steps of simulating said surgical instrument with a tool comprising a manual stick supporting at least two aligned spherical markers rigidly connected to each others, at least one of them comprising a pattern on its surface, capturing the position and axial orientation of said markers within a working volume inside a box having at least one aperture to reach said working volume with the tool inserted through said aperture, deducting from them the movements, position and orientation of the tool when operated by the user within said working volume, visualizing a 3D model of the surgical instrument simulated by the tool in motion inside said working volume, simulating an image corresponding to said object, and simulating the action of said surgical instrument operated by the user on said object.

In a preferred embodiment, capturing the movements and axial orientation of the markers is undertaken with a set of at least three cameras having co-axial flashes, said cameras being externally synchronized, connected to processing means, placed inside the box containing said working volume and oriented such as all the points inside the working volume result in focus.

Advantageously, the processing of the image comprises the steps of extracting the pixels belonging to each markers by a threshold technique, for obtaining a binary image, grouping the over-threshold pixels into blobs and computing the centre of each blob and the pattern pixels for deducting the position and the axial orientation of the markers and the axial orientation of the tool.

The invention will be better understood from reading the following description of particular embodiments, given by way of non limiting example.

The description refers to the accompanying drawings, in which:

Figure 1 is a schematic view in perspective of an embodiment of the system according to the invention.

Figure 2 is a perspective view in transparency showing an embodiment of the means for capturing the movement of the markers according to the invention.

Figures 3 (a) (b) and (c) give images of a tool used to develop the invention.

Figure 4 shows an embodiment of a tool used with the invention.

Figure 5A shows an example of curve indicating the blob boundary points probability used with the invention in order to reconstruct the marker position.

Figure 5B provides an example of simulated data set to be used with the invention for constructing an algorithm of calculation of the marker center also in presence of partial occlusions.

Figure 6 shows different results obtained for position of the markers with the algorithm used more particularly with the embodiment of the invention corresponding to the data set of figure 5, and with two other methods.

Figure 7(a) provides the image of a markered surgery instrument according to an embodiment of the invention, and (b) a detailed and enlarged image of a marker with a stripe.

Figure 8 shows a surgical instrument in the reference position used with the algorithm of the invention more particularly described.

Figure 9 (a to d) provides the sequences which bring the surgical instrument form current position and orientation to reference conditions.

Figure 10 shows the framework for the computation of the Ry and Rz rotations, according to the algorithm more particularly used with the invention.

Figure 11 illustrates the 3D position reconstruction of a point with the marker of a stripe segment.

Figure 12 shows an example of a parametrization of a sphere adopted with the embodiment of the invention.

Figure 13 (a to f) illustrates some typical patterns with their representation in the plane, which are used with different embodiments of the invention.

Figure 14 shows (a) current and reference pointed markers (b) 3D patterns points and (c) matching of the patterns in the parameterised $\alpha$, $\beta$ plane.

Figure 15 illustrates the extrapolated line from measured points, which allows the perfect accuracy of the system and method according to the invention.

Figure 16, 17 and 18 are example of tools used for calibration of the system of the invention.

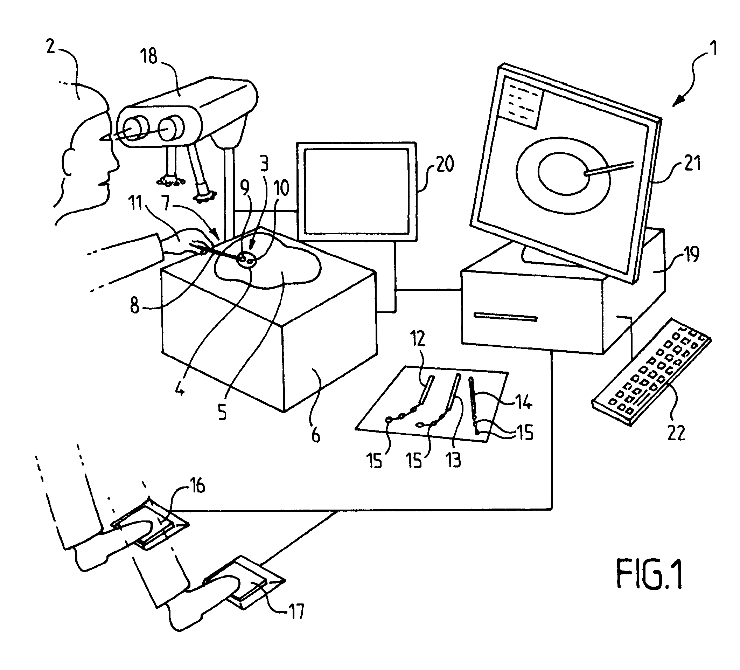

Figure 1 shows a system 1 for simulating a cataract operation by a user 2 on a simulated eye 3 corresponding to an aperture 4 provided in a plastic mask 5.

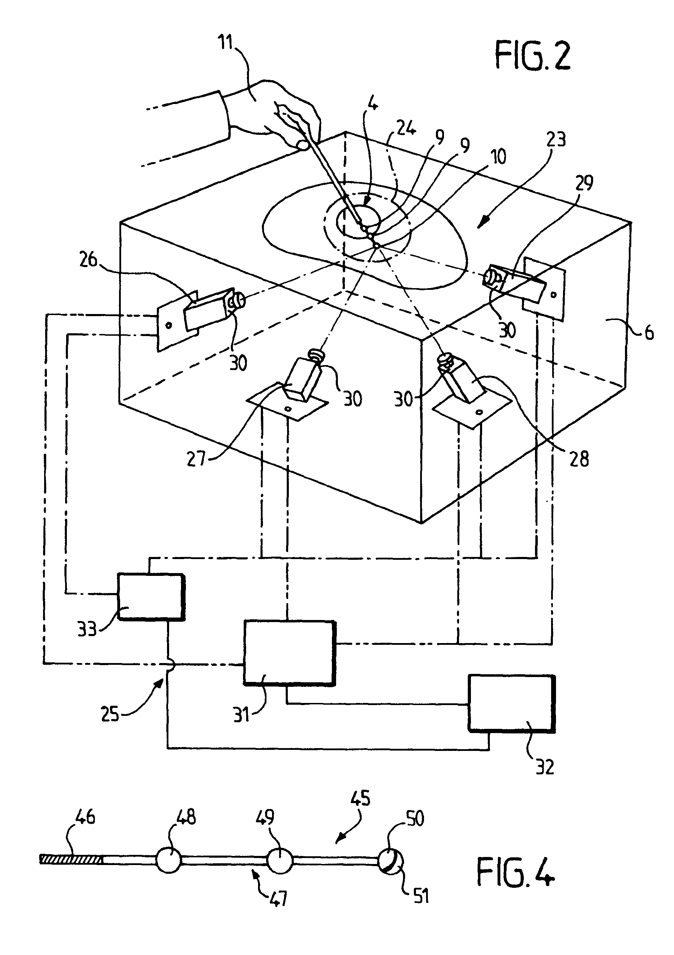

The interior of the plastic mask is in relation with the interior of a parallelepipedic box 6 which will be described in reference to figure 2.

The system comprises a tool 7 for simulating a surgical instrument comprising a manual stick 8 supporting at least two spherical markers 9 and 10 rigidly connected to each other along the stick. It is hold by the user's hand 11.

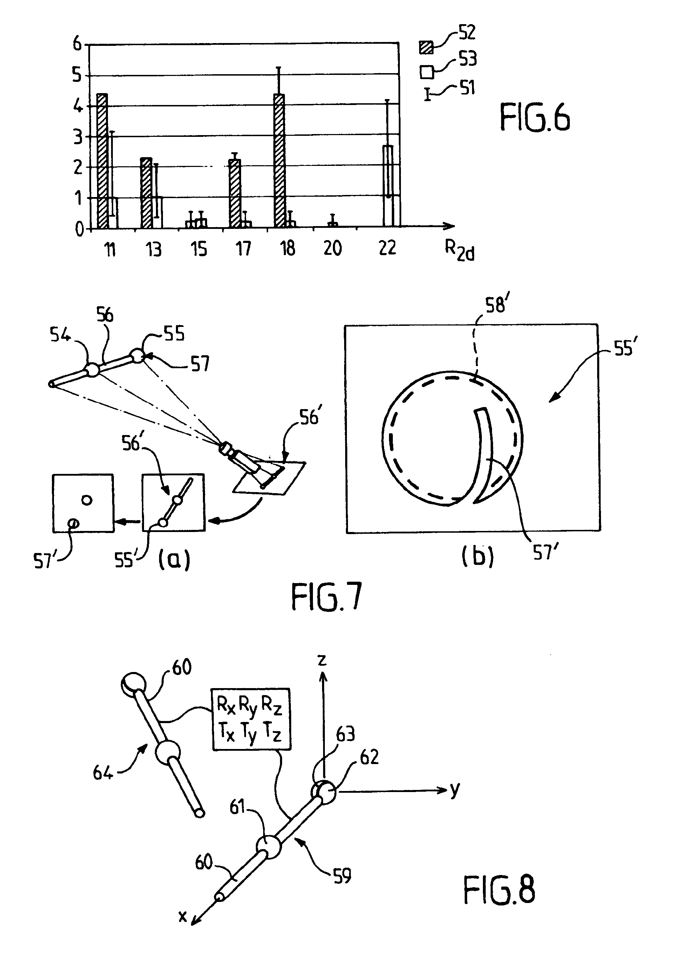

One of the spherical marker 9 comprises a stripe segment on its surface [see figure 7(b)].

Several other tools for simulated surgical instruments 12, 13, 14 are included in the system, and are usable for simulating other possible operations. They are all constituted by corresponding sticks, either straight or curvated with spherical markers 15 aligned along said straight or curved stick and are for instance placed upon reachable distance on a table.

According to the real life apparatus for performing such operation, the system 1 further includes pedals 16 and 17 to be activated by the user for simulating stereo microscope control (action) with the tool (pedal 16) or aspiration of the destructed material (pedal 17).

The user 2 controls his action through binocular 18.

The pedals 16, 17, the interior of the box 6 and the binocular 18 are connected to a computer 19, and to a data bank 20, with usual peripherics such as a display screen 21 and a touch pad 22.

Figure 2 shows the interior 23 of the box 6 of figure 1.

As already indicated, box 6 presents an aperture 4.

It delimits at its upper part, a working volume 24 reachable with the tool.

The system further comprises means 25 for capturing the position and axial orientation of the spherical markers 9 and 10 and deducting from them the movements, the 3D position and the 3D orientation of the tool when operated by the user's hand 11.

Means 25 comprises a set of four cameras 26, 27, 28 and 29 fixedly placed within the box 6 whose interiors walls are painted in black. Such cameras have flashes 30 provided in front of the cameras, axially oriented parallely to the corresponding camera axis, are externally synchronized in a way known per se through synchronizing means 31 and are connected to processing means 32 included in computer 19.

They are oriented with controlling and monitoring means 33 such as all the points inside the working volume result in focus, such means 33 being also connected to said processing means 32.

A sampling frequency of 30Hz is advantageously provided.

Cameras 26, 27, 28 and 29 are for example using Tele lenses of 35mm, with an angle of view of 13 degrees, which allows covering a working volume of 8000 mm$^3$ (20mm x 20mm x 20mm) at a distance of 150 mm from the frontal lens.

A valid alternative would be to use telecentric lenses. The limited angle of view obtained allows getting an almost circular image for any marker viewed inside the working volume.

In other words, in the embodiment more particularly described here, means 25 for capturing the position and axial orientation is based on a set of four video cameras, each coupled with an illuminator (flashes 30).

The spherical markers 9 and 10, on their part, are painted with white opaque paint, to generate a high-contrast image of the markers on the cameras image plane.

As a result, in case of no occlusion, all the pixels belonging to the markers appear on the image as a circular spot called hereafter a "blob", which is much brighter than the background 3. The center of the markers image is then computed in real-time as the baricenter of the cloud of pixels of the blob or by fitting a reflective intensity curve.

This permits to achieve a high accuracy and reliability in markers detection.

Furthermore, and as the same marker is surveyed by four cameras, its 3D position can be computed through very accurate triangulation in a way known by itself for the man skilled in the art.

However, and as indicated earlier, with the markers based approach of the prior art to motion capture, the true position measured for a marker has intrinsic inaccuracy.

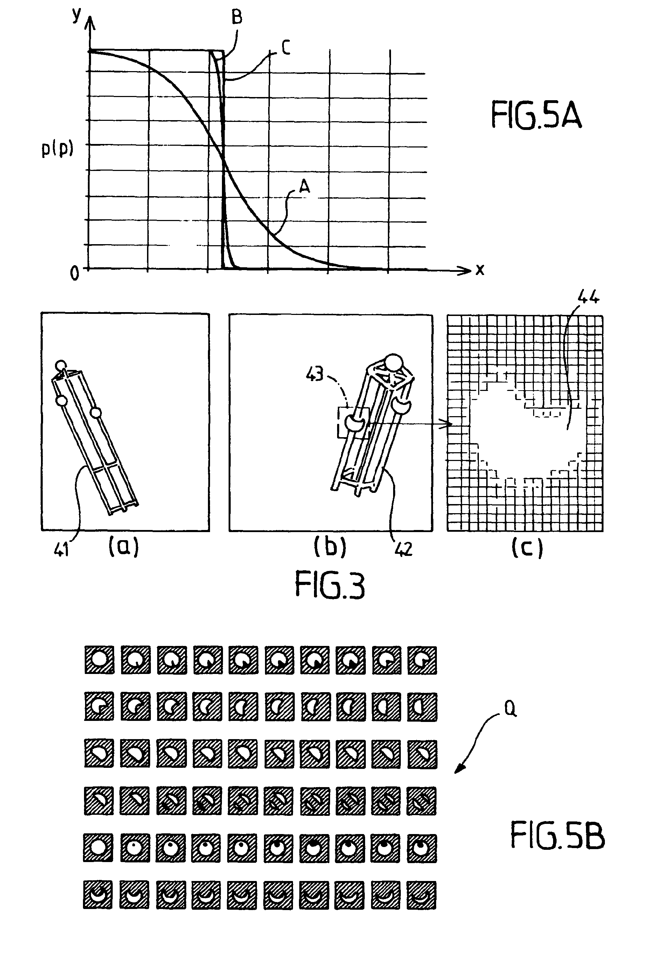

Again, it is because if, flat anisotropic, structured markers, such as the one appearing on instrument 41 of figure 3a, used in close-range photogrammetry, can guarantee high accuracy when surveyed frontally, their precise localization onto the image plane can be problematic if they are surveyed at an angle.

When spherical markers are adopted such as on the tool 42 of figure 3b, the localization of its centre is still inaccurate when the marker is partially occluded to the view of the camera as shown in the dotted square 43 in figure 3b.

The marker projection onto the image plane assumes a "cheese-like" shape 44 (see figure 3c) and the computation of the marker position can easily be biased.

With the invention different tools than the typical structured anisotropic tools classical in photogrammetry are used, which allows through specifically developed image processing procedures as described later on, high accuracy in the computation of the markers position even in presence of partial occlusions and overlaps.

More particularly (see figure 4) a typical instrument 45 used for the simulator, in a preferred embodiment of the invention, is constituted of an handle 46 for example of 5 mm of diameter, which can be grasped properly, and a tip 47 of 20 mm long with for instance a cross-section of 0.5 mm.

Three markers 48, 49 and 50 are attached to the axis of the instruments and are constituted of metal spheres of 1 mm or 2 mm of diameter. The spheres are painted uniformly with opaque white color, such as to produce a uniform white image when lighted with a flash and viewed at the proper distance. They are positioned along the axis of the tip, at different distances between them to facilitate their classification, the last one 50 being for example fixed at the end of the tip 47.

Furthermore, in this particular case where three markers are advantageously used, bearing in mind that only two are needed, the six degrees of freedom of the simulated surgical instrument is obtained via one of them, for instance the last one 50, carrying a stripe segment 51 over its surface.

The system is then calibrated through a procedure to determine the system parameters, which are: the relative position and orientation of each cameras (exterior parameters); the focal length, the principal point and the distortion parameters (interior parameters).

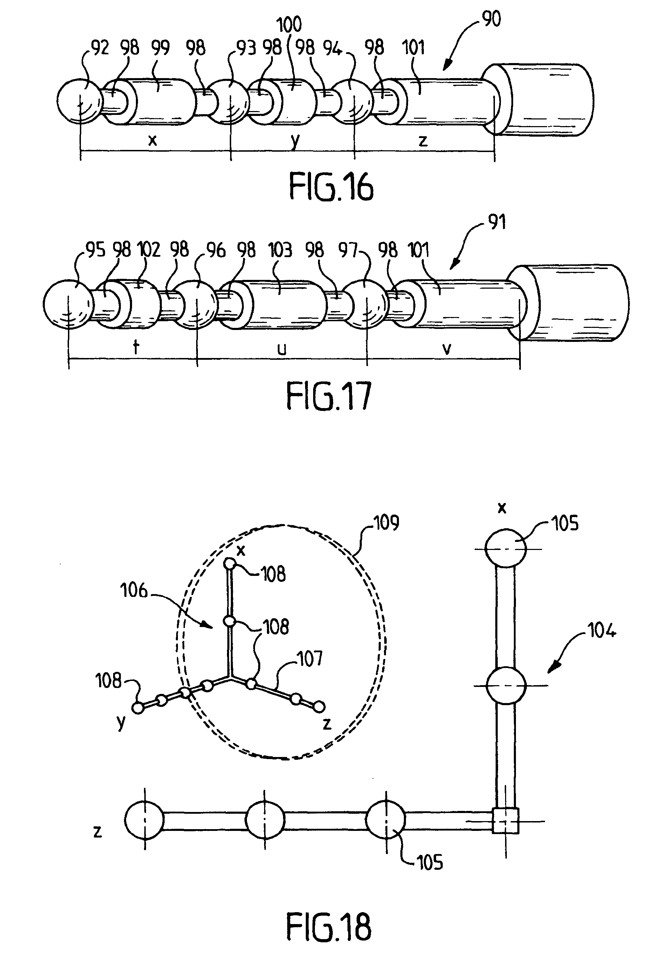

For this a calibration using bundle-adjustment, is for example provided which will be described hereafter also in reference to figure 16 to 18.

The method developed to compute the markers position has been termed OMAMA, which stands for Occluded MArker MAtching.

Under the hypothesis of high contrast between markers and surrounding background, the pixels belonging to a marker can be extracted by simple thresholding leading to a binary image.

After binarization, the over-threshold pixels are grouped into blobs through standard region growing techniques and the center of each blob is computed.

This represents an approximation of the marker's position.

The following real-time refinement procedure is then implemented to locate the marker's position with high accuracy. It is based on the a priori knowledge of the expected blob shape (circular shape), which are summarized in the following assumptions:

i. The expected blob shape is circular, with radius $R_{2d}$ (this assumption is discussed later).
ii. Some pixels of the marker are not visible on the image because their view is prevented by occluding objects.

A blob boundary point is defined as a point positioned on the edge between two pixels: one belonging to the marker and one to the background.

Considering the definition of blob boundary point, the hypotheses (i) and (ii) can be reformulated as a single hypothesis as:

iii. The expected blob boundary points lay inside a circle having radius $R_{2d}$.

The hypothesis (iii) can be mathematically reformulated by means of the likelihood function, where the coordinates of the real center of the circular shape of the marker image, (xc,yc), constitute two unknown parameters. Maximizing the likelihood of the observed blob boundary points allows estimating the unknowns (xc,yc).

Given a blob and its Nb blob boundary points, $(x_{bi}, y_{bi})$, i=1..$N_b$, the probability of a blob boundary point, $(x_{bi}, y_{bi})$, to belong to a marker centered in $(x_c, y_c)$ has to be defined.

This probability depends of the circle center, $(x_c, y_c)$.

First of all, we define $\rho_i$ as the distance between $(x_{bi}, y_{bi})$ and $(x_c, y_c)$:

$$\rho_i = \sqrt{\left(x_{bi} - x_c\right)^2 + \left(y_{bi} - y_c\right)^2} \qquad (1)$$

We define then the probability of the $i^{th}$ blob boundary point to be positioned at squared distance $\rho_i^2$ from the center (xc, yc), that is $p(\rho_i^2)$ ) as :

$$p\left(\rho_i^2\right) = \frac{t}{\ln\left[1 + \exp\left(t \cdot R_{2d}^2\right)\right]} \cdot \frac{1}{1 + \exp\left[t \cdot \left(\rho_i^2 - R_{2d}^2\right)\right]} \qquad (2)$$

where $t$ is a user defined parameter, which we call the transition. t represents the parameter which shapes the probability density function (cf. Fig. 5A).

The first ratio in Equation (2) guarantees that $\int_0^{+\infty} p(\rho^2) d\rho^2 = 1$, as it is expected for every probability density distribution.

The function $p(\rho_i^2)$ is depicted in figure 5A for different transition values, *t*, and fixed expected radius value, $R_{2d}$. Given the circle center $(x_c, y_c)$, the likelihood of a set of $N_b$ observed blob boundary points, *L*, can be written as:

$$L(x_c, y_c) = \prod_{i=1}^{N_b} p(\rho_i^2) \quad (3)$$

More precisely in reference to figure 5A, the blob boundary points probability density $p(_p)$ ($0_y$ axis) is a function of the squared distance ($0_x$ axis) from the center of the marker circular image, indicated here with x. The expected radius is fixed at $R_{2d} = 15$; the transition values, which controls the shape of the curve, are *t*=0.02 (reference A) *t*=0.2 (reference B) and *t*=2 (reference C).

By mathematical manipulation, it can be seen that maximizing *L* is equivalent to minimize the following function, which we called *E*:

$$E = \sum_{i=1}^{N_b} \ln\{1 + \exp[t \cdot (\rho_i^2 - R_{2d}^2)]\} = \sum_{i=1}^{N_b} \ln(1 + \exp\{t \cdot [(x_{bi} - x_c)^2 + (y_{bi} - y_c)^2 - R_{2d}^2]\}) \quad (4).$$

E is a non linear function of the two unknowns, xc and yc. Minimization of E is performed by means of the Newton's method, [see P.E. Frandsen, K. Jonasson, H.B. Nielsen, O. Tingleff, Unconstrained Optimization, 3rd Edition IMM (2004)], which converges in a few iterations if a good first solution is provided.

As a measure of convergence it is assumed that:

$$\|\mathbf{x}_{n-1} - \mathbf{x}_n\| \le \varepsilon \quad (5)$$

where $\mathbf{x}=(x_c, y_c)$.

Inizialization for $\mathbf{x}$ is given by the marker image centre.

To study the convergence property of the proposed algorithm and the accuracy with respect to the parameters R2d and t, extensive simulation was carried out.

The simulated dataset Q, which is shown in figure 5B, is composed of 60 images, of size 50 x 50 pixels. In each image a partially occluded circle is present; its radius is 15 pixels and its center is $(x_c, y_c) = (25, 25)$. The visible pixels of the circle are over-threshold, while those occluded by other objects are under-threshold.

The algorithm was tested on the simulated dataset, adopting different values for t={0.01, 0.05, 0.1, 0.5, 1} and R2d=17.5, 15, 30}. For each pair of parameters $\{R_{2d}, t\}$, and for each image of the simulated dataset, we measured the 2D error for the estimation of $(x_c, y_c)$, which is defined (for a single image as :

$$Err = \|(x_c, y_c) - (x_e, y_e)\| \quad (6)$$

where $(x_e, y_e)$ is the marker centre estimated minimizing Eq. For each choice of $\{R_{2d}, t\}$, we measured the 25%, 50% and 75% percentiles of Err on the simulated dataset. For each choice of $\{R_{2d}, t\}$, we also measured the mean and the standard deviation of the number of iterations required by the algorithm to converge, that is to satisfy the stopping condition (5), with $\varepsilon$=0.01.

Results are reported in Tables I and II.

Table I. The 25%, 50% and 75% percentile of error in estimating the circle center for the proposed algorithm on the simulated dataset, for $t=\{0.01, 0.05, 0.1, 0.5, 1\}$ and $R_{2d}=\{7.5, 15, 30\}$.

| | | $R_{2d}=7.5$ | | | | $R_{2d}=15$ | | | | $R_{2d}=30$ | |
|---|---|---|---|---|---|---|---|---|---|---|---|
| Percentile | 25% | 50% | 75% | | 25% | 50% | 75% | | 25% | 50% | 75% |
| T=0.01 | 0.548 | 1.024 | 2.409 | | 0.358 | 0.679 | 2.122 | | 0.234 | 0.622 | 1.802 |
| T=0.05 | 0.613 | 1.245 | 2.722 | | 0.123 | 0.533 | 1.068 | | 0.060 | 0.384 | 0.636 |
| T=0.1 | 0.623 | 1.242 | 2.649 | | 0.080 | 0.445 | 0.647 | | 0.028 | 0.236 | 0.536 |
| T=0.5 | 0.673 | 1.241 | 2.638 | | 0.047 | 0.282 | 0.511 | | 0.004 | 0.072 | 0.416 |
| t=1 | 0.674 | 1.239 | 2.643 | | 0.037 | 0.279 | 0.519 | | | | |

Table II. The mean and the standard deviation of the number of iterations required by the proposed algorithm to reach the convergence, for the simulated dataset.

| | $R_{2d}=7.5$ | | $R_{2d}=15$ | | $R_{2d}=30$ | |
|---|---|---|---|---|---|---|
| | Mean | Std | Mean | Std | Mean | Std |
| t=0.01 | 3.06 | 0.51 | 3.15 | 0.60 | 3.41 | 0.74 |
| t=0.05 | 3.15 | 0.65 | 3.1 | 0.81 | 7.13 | 4.32 |
| t=0.1 | 3.16 | 0.66 | 3.6 | 1.06 | 10.83 | 6.17 |
| t=0.5 | 3.18 | 0.65 | 5.1 | 2.25 | 40.95 | 27.99 |
| t=1 | 3.15 | 0.68 | 5.81 | 2.55 | | |

As it can be seen in Table I, the accuracy decreases when the radius is under-estimated (estimated half of the true value), from 0.27 pixels to 1.23 pixels. However, when it is overestimated (twice the true value), accuracy is increased (from 0.27 pixels to 0.072 pixels) at the expenses of computational time with increases from 5.1 iterations to more than 40 iterations.

Results were compared (see figure 6) with two other methods available to compute the marker centre: the simple average of the over-threshold pixels (i.e. the BBBT method). (reference 51) and the Hough transform (reference 52).

Results are reported in figure 6 as a function of the given marker image radius $R_{2d}$.

These show that the presented algorithm (reference 53) is superior to the two methods in all conditions. Hough transform (52) produces a similar accuracy only when the given radius matches the real radius of the marker image, but computational cost is higher for this method if compared with OMAMA.

Moreover, the Hough transform produces large errors when the radius is wrongly estimated. The overall computational time was measured consistently in less than 1ms for images of 480 x 480 with three markers, on 8 bit / pixel.

More particularly in view of figure 6, it is provided the 50% percentile in the estimation of the circle center of the simulated dataset, for the Circular Hough Transform 52, with $R_{2d}=\{11, 13, 15, 17, 19$ and for the OMAMA 53 algorithm, with $R_{2d}=\{11, 13, 15, 17, 19\}$ and $t=\{0.2\}$). The marker image center 51, does not depend on these parameters and it is plotted on the rightmost part of the plot. The error bars indicate the 25% and 75% percentiles.

We assumed that the marker expected 2D measure of a marker radius, $R_{2d}$, could be estimated through Eq. (7).

$$R_{2d}(WD) = \frac{R_{3d} \cdot NCol}{FOV} = \frac{R_{3d} \cdot NCol}{2 \cdot tg(AOV) \cdot WD} \qquad (7)$$

where WD is the working distance, FOV is the field of view, AOV is the angle of view and Ncol the number of columns of the image. This is true only if WD is constant for all the markers.

However, little variations of WD poorly influences $R_{2d}$ for WD sufficiently large. If we derive Eq. (7) with respect to *WD* we obtain:

$$\frac{\partial R_{2d}}{\partial WD} = -\frac{R_{3d} \cdot NCol}{2 \cdot tg(AOV)} \cdot \frac{1}{WD^2} \qquad (8)$$

which represents the variation of R2d with respect to *WD,* and tends to zero for *WD*→∞.

In practice, variations of $R_{2d}$ smaller than (approximately) 10% are verified for:

$$\frac{|\Delta R_{2d}|}{R_{2d}} = \frac{\left| -\frac{R_{3d} \cdot NCol}{2 \cdot tg(AOV)} \cdot \frac{1}{WD^2} \cdot \Delta WD \right|}{\frac{R_{3d} \cdot NCol}{2 \cdot tg(AOV) \cdot WD}} = \frac{|\Delta WD|}{WD} \leq 0.1 \Rightarrow |\Delta WD| \leq 0.1 \cdot WD \qquad (9)$$

where △WD represents the possible variation of the working distance.

This condition (or a similar one) is generally satisfied in a MoCap system, where.the subject is constrained to move in a confined working volume; also in the augmented reality systems the working volume is generally well defined, thus making reliable the computation of R2d through Eq. (7).

Moreover, the expected radius can be computed in different manners for general purpose applications of the algorithm.

As demonstrated in Tables I and II, OMAMA. works also when $R_{2d}$ is badly estimated. The adoption of under-estimated $R_{2d}$ decreases the accuracy of the method (but accuracy higher than BBBT is nonetheless provided); on the over hand, overestimating $R_{2d}$ increases the accuracy, but makes convergence very slow.

The best compromise in terms of both accuracy and convergence speed are obtained when $R_{2d}$ is correctly estimated.

Finally, it is hereafter described that accurate computation of the marker center is also obtained with partial overlap.

We first project the predicted 3D position of each marker over the image plane, and obtain a set of 2D points (as many as the number of markers) on the image plane.

We detect all the pairs of points which are closer than twice the 2D marker radius. Each time this situation is verified, the following algorithm is adopted.

First, the pixels overthreshold are assigned to two different clusters on the basis of their distance from the two projected points, then the centroid is computed with one step of the OMAMA algorithm, obtaining the position of the two markers on the image plane. This two-steps procedure is iterated until convergence.

We will show now how, while using only two markers, the six degrees of freedom of a surgical instruments can be recovered. For this purpose, the model of the camera and of the surgical instrument are first introduced. Given a point P(X, Y, Z), its projection onto a camera image plane is given by:

$$\begin{bmatrix} x \\ y \\ w \end{bmatrix} = \begin{bmatrix} f_x & s & c_x \\ 0 & f_y & c_y \\ 0 & 0 & 1 \end{bmatrix} \cdot \begin{bmatrix} 1 & 0 & 0 & 0 \\ 0 & 1 & 0 & 0 \\ 0 & 0 & 1 & 0 \end{bmatrix} \cdot \begin{bmatrix} R^T & -R^T \cdot t \\ 0_3^T & 1 \end{bmatrix} \cdot \begin{bmatrix} X \\ Y \\ Z \\ 1 \end{bmatrix} \qquad (10)$$

where $f_x$, $f_y$ are the camera focal lengths, which take into account image plane shrinkage; $c(c_x, c_y)$ is the principal point: projection of the camera optical center onto the image plane; s takes into account non-orthogonality of the camera axes (usually s=0); R is a rotation matrix which describes the orientation of the camera image plane in an external reference frame; $t(t_x, t_y, t_z)$ is a position vector, providing the position of the optical center of the camera with respect to the external reference frame.

The projection of the point (X, Y, Z) onto the camera image, p(u,v), is then given by:

$$\begin{cases} u = \dfrac{x}{w} \\ v = \dfrac{y}{w} \end{cases} \quad (11)$$

Where p(u,v) is measured in pixels. Lenses often introduce image distortions which displace the measured pixel coordinates, given by Eq. (11), with respect to the projection coordinates. This displacement is classically described by a polynomial which contains distortion parameters:

$$\begin{cases} u' = d_u(u,v) \\ v' = d_v(u,v) \end{cases} \quad (12)$$

where u' and d' are the distorted (measured) pixel coordinates. Calibration can provide the distortion parameters, and the projection coordinates can be obtained inverting Eq.(12).

Therefore, in the following we will only consider true projection coordinates.

Now to obtain the model of the surgical instruments it is supposed that at least two spherical markers 54 et 55 can be placed on the axis of the surgical instruments 56 (figure 7a), with at least one marker 55 carrying a black opaque stripe segment 57 over its white opaque surface.

The stripe 57 is oriented as the instrument axis and it is supposed to lie in the XZ plane. An image 55' of such a marker 55 and the typical binarized image 57' of the stripe are shown in figure 7.

The dotted circle 58' limits the area used to individuate the pixels belonging to the black stripe.

In order to provide computation of the position and orientation of the surgical instrument, the following steps are then provided (see figure 8).

First a reference position and orientation 59 of the surgical instrument 60 is defined.

This is a preferential position, for instance the initial position or a target position. In the reference position 59, the surgical instrument 60 is aligned with the X axis (the two markers 61, 62 are aligned along the X axis), as shown on figure 8.

It is also supposed that the painted marker 62 lies at the origin of the reference system, O(0, 0, 0).

In the reference position 59, the stripe segment 63 is parallel to the X axis, it is contained in the XZ plane, and it is slightly shorter than 180 degrees.

A generic position and orientation of the surgical instrument (in the following: the current position and orientation 64) can be described by a rototranslation matrix with respect to its reference position.

The parameters which describe this transformation are three independent rotations and the translation T = T $[T_X, T_Y, T_Z]$ with respect to O.

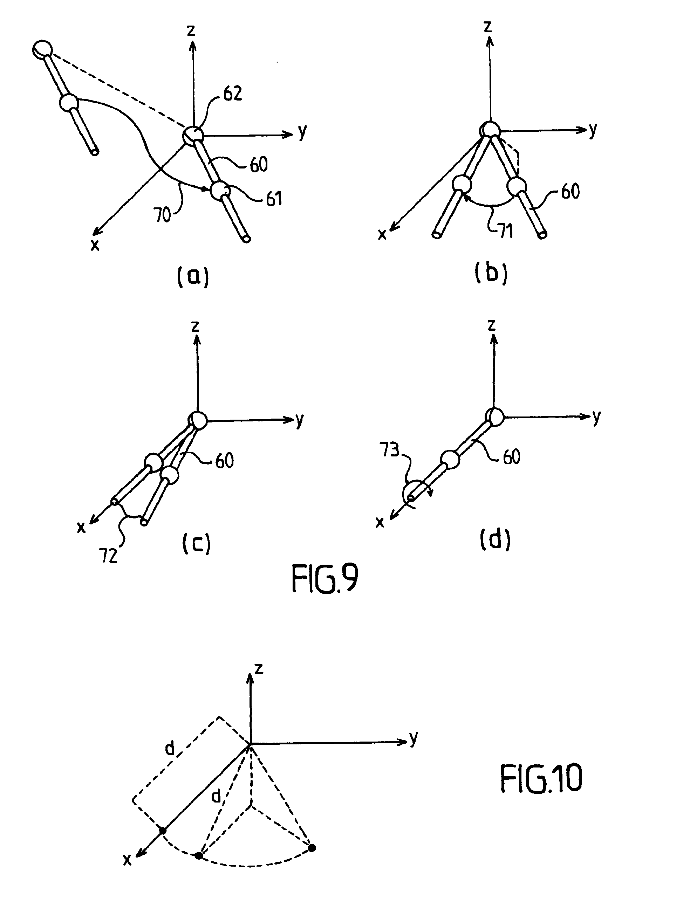

In the following and in reference to figure 9 a-d, we will adopt the three sequential rotation: roll, pitch and yaw, which correspond to three sequential rotations around the X, Y and Z axis.

These rotations are described by the $R_X$, $R_Y$ and $R_Z$ angles.

With these assumptions, starting from the current position, the surgical instrument 60 can be moved into the reference position by applying in sequence, first a translation 70 $[-T_X, -T_Y, -T_Z]$, then a rotation 71 of $-R_Z$ around the Z axis, a rotation 72 of $-R_Y$ around the Y axis and finally a rotation 73 of $-R_X$ around the X axis, as depicted in figure 9.

Other definitions of the rotation angles and of the sequence of operations can be adopted than those described in the embodiment of the invention more particularly mentioned here.

For instance angles can be defined through quaternions, through Eulerian angles and translation can be carried out after rotation. In these cases, the derivation in the next Sections should be modified accordingly.

It is now supposed that the motion of the surgical instruments is surveyed by N cameras (N > =2).

By means of triangulation, the 3D coordinates of the markers can be computed.

If $P_0[X_0, Y_0, Z_0]$ are the 3D coordinates of the painted markers and $P_1[X_1, Y_1, Z_1]$ those of the second one, since in reference condition the painted marker is positioned in the origin of the reference frame, the translation of the surgical instrument is given by :

$$[T_X, T_Y, T_Z] = [X_0, Y_0, Z_0] \qquad (13)$$

The painted marker can be brought to the reference position, $0[0, 0, 0]$, applying the translation 70 $[-X_0, -Y_0, -Z_0]$, as shown in figure 9a.

If we consider then figure 9b and figure 10, and due to the previous translation, the not painted white marker is positioned now in $[X_1 - X_0, Y_1 - Y_0, Z_1 - Z_0]$.

The rotation 71 around the Z axis for the surgical instrument is then given by :

$$R_Z = \text{atan2}(Y_1 - Y_0, X_1 - X_0) \qquad (14)$$

The next step is the computation of the rotation around the Y axis.

Considering figure 9c and 10, we can derive the following expression for $R_y$ :

$$R_Y = \text{atan2}\left(Z_1 - Z_0, \sqrt{(X_1 - X_0)^2 + (Y_1 - Y_0)^2}\right) \qquad (15)$$

It should be noticed here that we have not used the stripe painted on the top marker to compute TX, TY, TZ, RY and RZ.

The orientation in space of the segment have simply been determined through the two markers 61 and 62.

Figure 10 provides the framework for the computation of the $R_y$ and $R_z$ rotation.

The stripe comes into play when the axial rotation of the surgical instrument, $R_X$, has to be computed. Axial rotation $R_X$ cannot be recovered using only two unstructured markers, but it becomes feasible if at least one painted marker is used.

The algorithm will now be described as follows.

Let us consider figure 7b. The projection of a stripe segment over the marker's surface is a curve segment 57' on the 2D plane.

This is constituted by an ensemble of black pixels enclosed inside the white pixels belonging to the marker surface. Therefore, all the pixels which constitute 57' can be identified as the black pixels inside the marker area. To avoid external black pixels to be classified as pixels belonging to 57', the search for black pixels is performed only inside an area 58'which is slightly smaller that the marker area, as shown in figure 7b.

We suppose that the 3D position of the marker 55 $P_0(X_0, Y_0, Z_0)$ and its radius R3D, are known.

The spherical marker's surface is then described as :

$$(X_p - X_0)^2 + (Y_p - Y_0)^2 + (Z_p - Z_0)^2 = R_{3D}^2 \qquad (16)$$

For each pixel belonging to 57', $p_Q(u_P, v_p)$, we first compute the line, r, through the optical center of that camera, and then compute the two intersection points of r with the sphere in Eq. (16).

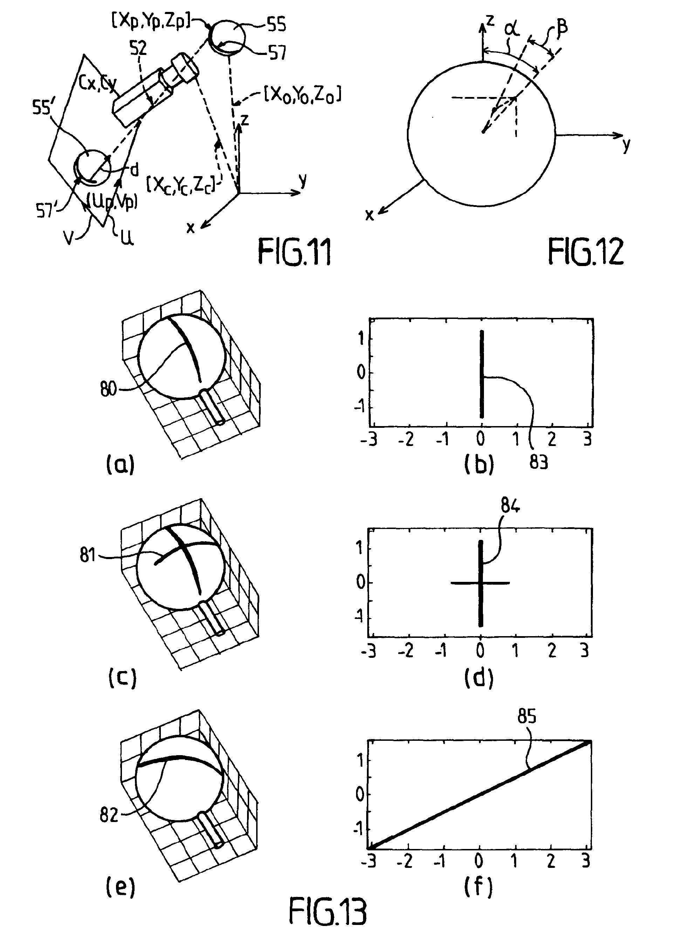

The point closest to the camera image plane represents the position of a point of the black stripe segment painted on the marker (see figure 11).

More in details. The optical center of the camera, PC[XC, YC, ZC], is known from calibration.

The direction d of r is given by :

$$\mathbf{d} = \mathbf{R} \cdot \begin{bmatrix} \dfrac{u_p - c_x}{f_x} \\[2mm] \dfrac{v_p - c_y}{f_y} \\[2mm] 1 \end{bmatrix} \qquad (17)$$

where R is the 3x3 orientation matrix of the camera, and it has been computed in the calibration phase. The vector d is then normalized so that $\|d\|=1$. Any point $P[X_p, Y_p, Z_p]$ on r is described by parametric coordinates as :

$$\begin{bmatrix} X \\ Y \\ Z \end{bmatrix} = \begin{bmatrix} X_C \\ Y_C \\ Z_C \end{bmatrix} + \lambda \cdot \begin{bmatrix} d_X \\ d_Y \\ d_Z \end{bmatrix} \qquad (18)$$

where $\lambda$ individuates the position of P along the line and $d_X$, $d_Y$ and $d_Z$ are the components of d (director cosines). Combining Eqs. (16) and (18), the following second degree equation in $\lambda$ is derivated :

$$a \cdot \lambda^2 + b \cdot \lambda + c = 0 \qquad (19)$$

with

$$a = 1$$

$$b = 2 \cdot \left[ d_X \cdot (X_C - X_0) + d_Y \cdot (Y_C - Y_0) + d_Z \cdot (Z_C - Z_0) \right] = 2 \cdot \mathbf{d} \cdot (P_C - P_0)^T \qquad (20)$$

$$c = (X_C - X_0)^2 + (Y_C - Y_0)^2 + (Z_C - Z_0)^2 - R_{3D}^2 = (P_C - P_0) \cdot (P_C - P_0)^T - R_{3D}^2$$

Eq. (20) has the following determinant:

$$\Delta = b^2 - 4 \cdot a \cdot c = \left[ 2 \cdot \mathbf{d} \cdot (P_C - P_0)^T \right]^2 - 4 \cdot \left[ (P_C - P_0) \cdot (P_C - P_0)^T - R_{3D}^2 \right] \qquad (21)$$

For $\triangle > 0$, the line and the sphere has two intersections, $P_{p,1}$ and $P_{p,2}$, (for $\triangle = 0$ the two intersections are coincident), that are given by:

$$\begin{cases} P_{p,1} = P_0 + \lambda_1 \cdot d \\ P_{p,2} = P_0 + \lambda_2 \cdot d \end{cases} \tag{22}.$$

with:

$$\lambda_{1,2} = \frac{-b \pm \sqrt{\Delta}}{2 \cdot a} = d \cdot (X_0 - X_C)^T \pm \frac{\sqrt{\Delta}}{2} \cdot d \tag{23}$$

Since $d \cdot (P_0-P_C)^T > 0$ for real cameras (points viewed in front of the camera), the 3D coordinates of the stripe points are given by $P_{P,2}$, which is the solution closest to the camera optical center.
Eq. (22), computed for all the pixels of 57' provides the 3D coordinates of the stripe points.
We will now show in the following how to use such information to compute the axial rotation of the surgical instrument.
Let us first define the following not standard parameterization for the surface of the sphere (Fig. 12). A point on the sphere surface is identified by the following pair of parametric coordinates, $\alpha$, $\beta$:

$$\begin{cases} X = R_{3D} \cdot \sin \beta \\ Y = R_{3D} \cdot \sin \alpha \cdot \cos \beta \\ Z = R_{3D} \cdot \cos \alpha \cdot \cos \beta \end{cases} \tag{24}$$

where $\alpha$ is the angle between the projection of the point P onto the YZ plane and the Z axis and $\beta$ is the angle between the YZ plane and the line connecting the center of the sphere with the point P.
This parameterization allows to obtain the RX angle by computing only the $\alpha$ angle.
It can be shown that Eq. (24) can be inverted as :

$$\begin{cases} \alpha = \mathrm{atan2}(Y,Z) \\ \beta = \mathrm{atan2}\left(X, \sqrt{Y^2 + Z^2}\right) \end{cases} \tag{25}$$

from which it results that with this parameterization, a rotation around the axis X, represented by the angle $R_X$, is equivalent to a translation on the $\alpha$ axis.
Finally, we have represented on figure 13 three different patterns which can be painted over the sphere:

　　i) a vertical stripe 80 with length slight shorter than 180 degrees; this is the pattern implemented in the system more particularly described here;
　　ii) a cross 81 with its arms aligned to the Y and X axes;
　　iii) a line 82 running all around the sphere.

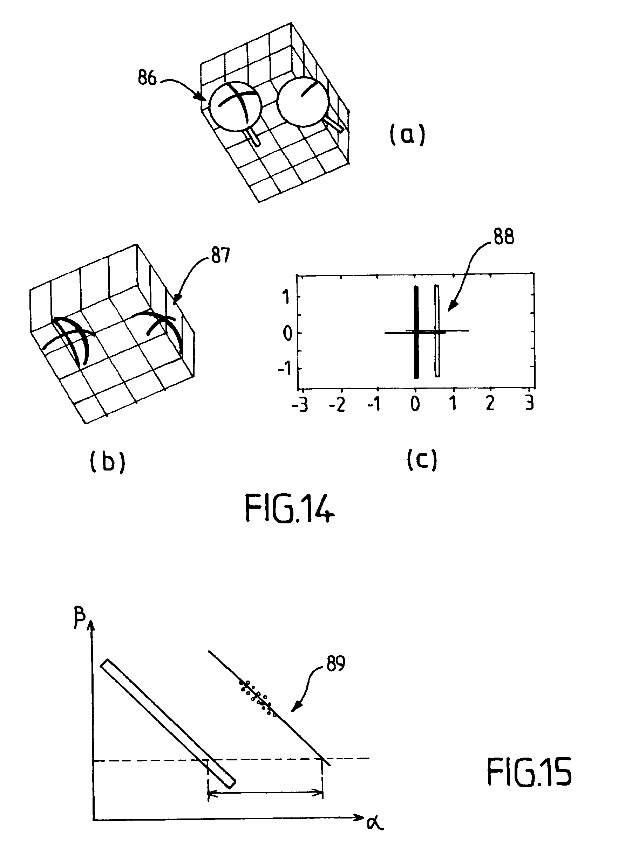

More precisely each pattern is defined by its corresponding set of points in the ($\alpha$, $\beta$) plane as shown in Fig. 13b, 13d and 13f. The vertical stripe 80 is associated to a vertical segment 83 in the ($\alpha$, $\beta$) plane, positioned at $\alpha = 0$, the cross 81 by a cross 84 and the continuous line 82 as a diagonal line 85.
Let us start analyzing the cross pattern 86 (Fig. 14a). Its 3D points can be computed through Eq. (22).
These points can then be transformed by applying the translation and rotation angles, $-R_Z$ and $-R_Y$, to bring them close to the reference position 87 as described earlier.

The obtained points are referred to as "Partially rototranslated points pattern points" 88 and they are distributed along lines parallel to the axes $\alpha$ and $\beta$ (see Fig. 14c and Fig.15).

Such points are rotated of an angle RX around the X axis, with respect to the cross in the reference position.

To get a robust estimate of $\alpha$, a 2D cross-correlation between the points in the reference position and the points in the partially rototranslated position could be carried out on the [$\alpha$ $\beta$] plane on the $\alpha$ coordinate.

However cross-correlation can become inaccurate when part of the pattern is missing. This can happen when, because of marker rotation during the motion, part of the cross is not visible to the camera.

In this case a cross-correlation would be carried out between the complete cross pattern in the reference position and the partial pattern in the current position. Moreover the cross-correlation operation between point clouds requires intensive computation.

A pattern, which brings to a more simple formulation is represented by the vertical stripe segment. In this case, the mean or median value of the partially rototranslated points gives the desired RX orientation. This solution cannot generally track the axial rotation over 360 degrees; however, it has been adopted here because the four cameras used guarantee that the pattern can be surveyed by multiple view points.

The system of the invention needs a precise calibration in order to obtain optimum accuracy.

For this, specific calibration tools 90, 91 and 106 are used (see figures 16, 17 and 18).

More precisely, and as indicated earlier calibration is the procedure to determine the system parameters which are the relative position and orientation of each cameras, the focal length, the principal point and the distortion parameters.

For this, bundle adjustment is used, which is initialised by surveying a 3D structure (tool 106) having three orthogonal axes 107 containing nine markers 108, i.e. and for instance two spheres on the x axes, three on the z axes and four on the y axes.

The tool 106 (Figure 18) is a steel object.

Its measures and the distances between each spheres of each axis are stored in a file with a precision which reaches the micrometer digit.

The parameters are then refined through an interative estimation which works on a set of calibration points collected moving inside the working volume 109, a tip with a single marker or its extremity.

Other calibration procedures can be used as well.

In the calibration phase the exact position of the two slits of the mannequin's eyes (aperture 4 of figures 1 and 2) with respect to the camera is computed as well as the true distance between the markers positioned on the tips.

The classification of the markers is carried out through multiple criteria which comprehend prediction of the position, based on FIR filter, the distance and alignment with the other markers of the same tip and with their tip's entrance slit, and the number of cameras which survey the marker.

From the position of the markers, the position and orientation of the instruments can be derived.

In this procedure, there are two modules: the Acquisition (AM) and the Calibration (CM) Modules.

The AM is for managing the four black/white cameras, and their acquired images; the CM is for managing data stored from the AM, to generate the workspace coordinates and to refine the calibration. The software analyses the acquired images, and calculates the barycentre of the white spheres in the black surface of the workspace as indicated earlier.

In the AM, a voice generic visualization is selected.

Then the tool 106 is put in the simulator. A step of verifying that the television cameras frame the whole axes and that the central zone of the axes is in cameras' fire is undertaken.

If the axes are not framed completely (all the nine spheres), the position of the cameras is modified. If the axes are not fired correctly the second ferrule of the cameras' optics is regulated.

A voice is then selected for axes capture.

Then the system acquires for around 10 seconds the images of the axes. The data are stored in a file AxesV.txt. An algorithm, using the known measures of the axes, examines the captured image of the axes, and so each camera gets its position relative to the axes, its coordinates in the workspace.

In the CM the AxesV.txt file is then opened and an Operation InitCalibration is generated and selected.

The cameras are then visualized in the positions related to the just acquired coordinates.

In the window of CM, a 3D window is moved with the mouse, holding pressed the left key or the right one to zoom. Verification that the television cameras are framing the axes is then undertaken. If this condition is not verified, the axes acquisition is repeated.

Then the tool 106 is removed and a Working Mask is provided.

A Floating Tip 100 is then inserted first in the right hole, then in the left one, moving slowly inside the mask, trying to cover the widest workspace, independently from the fact to go out of the visual field of the 4 television cameras: this for about 4-5 minutes. The coordinates of the floating tip will be stored in the FloatingV.txt file.

Operations-FloatingSequence is then selected and FloatingV.txt is opened.

The acquired points will appear around the axes, with a white point that stirs among them.

Operations-RefineCalibration is then selected.

The module will for instance process thirty five steps of refining process. The software analyzes the coordinates acquired by the four cameras, compares by couple, and minimizes the differences between coordinates acquired by two different cameras. The 2DRMS value visualized in the window will have to converge toward a maximum of 0,600, with optimal value of 0,200.

If the value of convergence is above 0,600, the floating capture is repeated and operations are refined in the AM Insert tip.

It is then inserted in the left hole the tip 90 (Figure 16.

Tip 90 combines three markers 92, 93, 94, precisely spaced with known distances x, y and z and presents a profile with long distance x between the 1° and 2° sphere.

Tip 90 is inserted up to that the three markers 92, 93, 94 are visible by the cameras, for about 10 seconds. Specific calibrated pieces are present between the markers with specific dimensions, for instance here, piece 98 are 1 mm long, piece 99 : 3 mm, piece 100 : 1 mm, piece 101 : 12 mm and sphere : 2 mm each element being separated between each other by 1 mm.

Then the tip 91 with makers 95, 96 and 97 spaced by known distances t, u and v (and pieces 98, 102 and 103) is inserted and the same is done in the right hole (profile with short distance t between the 1° and 2° sphere).

Here piece 102 is 1 mm and 103, 3 mm.

The data of the tips will be stored in the Insert1V.txt and Insert2V.txt files.

Then a Session-NewInsertPoints is selected in the CM and the files Insert1V.txt and Insert2V.txt are opened.

Two spheres will therefore appear in correspondence of the holes.

Finally, in the AM a voice "2 tips Tracking" is selected. One verifies, in the 3D VTK window, the correctness of the tracking. In 3D VTK the two tips 90 and 91 are represented by a cylinder and three different coloured spheres. If there are tracking problems in the workspace zone, the little coloured balls become white or disappear.

The procedure may be repeated, putting attention to cover all the workspace during the floating capture operation.

It will now be described the functioning process of the system in reference to figure 1 and 2.

After calibration of the system as above described, the software of simulator is started by initialising a program of visualisation in 3D such as a program developed with tools provided by Microsoft.

Data concerning eyes and these diseases are also stored in data bank 20 and introduced in a way known per se.

A picture, also seeable through the binocular 18 of a simulated microscope, appears on the display screen accordingly.

The user 2 introduces the tool 3 in the hole 4. Due to the above described algorithms and in relation with the visualisation program, correctly interfaced in a way known by the man skilled in the art, it appears in 3' on the display screen 21.

The user then moves the tool progressively to reach the cornea C with tool 3', which acts as a stereo-microscope actioned with pedal 16.

An other tool A is simulated for aspiring the destructed cornea, via a pedal 17, with a corresponding simulated noise for helping the trainee.

The software is programmed for creating visual reaction on the screen, if the simulated tool 3' acting as a phacoemulsificator is badly used, i.e. appearance of a blood flow, visual destruction etc...

Such data are built in a way known per se, according to practice.

The invention can also be advantageously used for other simulations in microsurgery not related to the eye.

**Claims**

1. A system (1) for simulating a manual interventional operation by a user (2) on an object (3) with a surgical instrument, **characterized in that** said system comprises

a tool (7) for simulating said surgical instrument, comprising a manual stick (8) supporting at least two spherical markers (9, 10) rigidly connected to each others, at least one of them (9) comprising a pattern (51, 55') on its surface a box (6) with at least one aperture (4) comprising a working volume (24) reachable with the tool through said aperture, means (25) for capturing the position and axial orientation of said markers within said working volume and deducting from them the movements, the 3D position and the 3D orientation of the tool when operated by the user within said working volume, means (16-21) for visualizing a 3D model of the surgical instrument simulated by the tool in motion inside said working volume,

means (19, 20) for simulating an image corresponding to said object, and

means (16, 17, 19, 20) for simulating the action of said surgical instrument operated by the user on said object.

**2.** A system according to claim 1, **characterised in that** the means (25) for capturing the movements and axial orientation of the markers comprise a set of at least two cameras (26, 27, 28, 29) having co-axial flashes (30), said cameras being externally synchronized, connected to processing means (19), placed inside the box (6) containing said working volume and oriented such as all the points inside the working volume result in focus.

**3.** A system according to claim 2, **characterised in that** the means (25) for capturing the movement of the instrument comprise four cameras (26, 27, 28, 29) or more.

**4.** A system according to any of claims 2 and 3, **characterised in that** the processing means comprise means (19) to extract the pixels belonging to each markers by a threshold technique, for obtaining a binary image, grouping the over-threshold pixels into blobs and computing the centre of each blob for deducting the position and the axial orientation of the marker.

**5.** A system according to any of the preceding claims, **characterised in that** the tool (7) comprises at least three spherical markers (9, 10).

**6.** A system according to claim 4, **characterised in that** the markers (9, 10) are aligned and disposed along the stick (8) at predetermined distances between each others.

**7.** A system according to any of the preceding claims, **characterised in that** at least two markers comprise a pattern on their surface.

**8.** A system according to any of the preceding claims, **characterised in that** said means (16-21) for visualizing a 3D model of the instrument and the means for simulating an image of the object and for simulating the action of said instrument on said object comprise a display screen (21) and controlling means (16, 17) of the operation by the user actionable by foot.

**9.** A system according to any of the preceding claims, **characterised in that** the pattern or one of the patterns has a crux form.

**10.** A system according to any of the preceding claims, **characterised in that** the pattern or one of the patterns is a stripe segment.

**11.** A method for simulating a manual interventional operation by a user (2) on an object (3) with a surgical instrument, **characterized in that** it comprises the steps of
simulating said surgical instrument with a tool (7) comprising a manual stick (8) supporting at least two spherical markers (9, 10) rigidly connected to each others, at least one of them (9) comprising a pattern (51, 55') on its surface, capturing the position and axial orientation of said markers within a working volume (24) inside a box (6) having at least one aperture (4) to reach said working volume with the tool through said aperture, deducting from them the movements, position and orientation of the tool (7) when operated by the user within said working volume - visualizing a 3D model of the surgical instrument simulated by the tool in motion inside said working volume, simulating an image corresponding to said object, and simulating the action of said surgical instrument operated by the user on said object.

**12.** The method according to claim 11, **characterised in that** capturing the movements and axial orientation of the markers (9, 10) is undertaken with a set of at least two cameras (26, 27, 28, 29) having co-axial flashes, said cameras being externally synchronized, connected to processing means, placed inside the box containing said working volume and oriented such as all the points inside the working volume result in focus.

**13.** The method according to any of claims 11 and 12, wherein the processing of the image comprises the steps of extracting the pixels belonging to each markers by a threshold technique, for obtaining a binary image, grouping the over-threshold pixels into blobs and computing the centre of each blob for deducting the axial orientation of the markers.

FIG.1

EP 2 009 613 A1

# FIG.2

# FIG.4

FIG.5A

FIG.3

FIG.5B

FIG.6

FIG.7

FIG.8

FIG.9

FIG.10

**FIG.11**

**FIG.12**

(a)

(b)

(c)

(d)

(e)

(f)

**FIG.13**

FIG.14

FIG.15

FIG.16

FIG.17

FIG.18

European Patent Office

**EUROPEAN SEARCH REPORT**

Application Number

EP 07 29 0826

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 5 766 016 A (SINCLAIR MICHAEL J [US] ET AL) 16 June 1998 (1998-06-16)<br>* column 5, line 59 - column 6, line 3 *<br>* column 5, lines 15-27 *<br>----- | 1-12 | INV.<br>G09B23/28<br>G09B23/30 |
| A | FR 2 691 826 A (ALLAL HOSSEIN [FR]) 3 December 1993 (1993-12-03)<br>* page 3, columns 24-35; figure 1 *<br>----- | 1-12 | |
| A | US 6 113 395 A (HON DAVID C [US]) 5 September 2000 (2000-09-05)<br>* column 8, lines 15-22; figure 2 *<br>* column 8, line 61 - column 9, line 3 *<br>----- | 1-12 | |
| A | WO 2005/096249 A (LAERDAL MEDICAL CORP [US]; FEYGIN DAVID [US]; HO CHIH-HAO [US]) 13 October 2005 (2005-10-13)<br>* claim 1 *<br>----- | 1-12 | |
| | | | **TECHNICAL FIELDS SEARCHED (IPC)**<br><br>G09B |

The present search report has been drawn up for all claims

| Place of search | Date of completion of the search | Examiner |
|---|---|---|
| Munich | 15 October 2007 | Beauce, Gaetan |

EPO FORM 1503 03.82 (P04C01)

**ANNEX TO THE EUROPEAN SEARCH REPORT
ON EUROPEAN PATENT APPLICATION NO.** EP 07 29 0826

This annex lists the patent family members relating to the patent documents cited in the above-mentioned European search report.
The members are as contained in the European Patent Office EDP file on
The European Patent Office is in no way liable for these particulars which are merely given for the purpose of information.

15-10-2007

| Patent document cited in search report | | Publication date | Patent family member(s) | | Publication date |
|---|---|---|---|---|---|
| US 5766016 | A | 16-06-1998 | NONE | | |
| FR 2691826 | A | 03-12-1993 | NONE | | |
| US 6113395 | A | 05-09-2000 | NONE | | |
| WO 2005096249 | A | 13-10-2005 | EP | 1728229 A1 | 06-12-2006 |
| | | | US | 2005214723 A1 | 29-09-2005 |